# EUROPÄISCHE PATENTANMELDUNG

(11) **EP 4 122 764 A1**
(43) Veröffentlichungstag der Anmeldung: **25.01.2023**
(21) Anmeldenummer: 22184565.4
(22) Anmeldetag: 13.07.2022
(51) Int. Cl.: B60Q 1/26, B60Q 1/44, A41D 13/01, A41D 1/04, B62H 5/00, E05B 67/00

(54) **WESTE**

(30) Priorität: 19.07.2021 DE 102021118626
(71) Anmelder: Geltenpoth, Christian, 90425 Nürnberg (DE)
(72) Erfinder: Geltenpoth, Christian, 90425 Nürnberg (DE)
(74) Vertreter: Feucker, Max Martin

(57) **Zusammenfassung**

Die vorliegende Erfindung betrifft eine Weste (1), umfassend einen Gurt (2), welche dadurch gekennzeichnet, dass der Gurt (2) ein abschließbares Schloss (2.1) umfasst.

## Beschreibung

Die vorliegende Erfindung betrifft eine Weste und insbesondere eine Sicherheits- oder Warnweste, wie sie beispielsweise beim Fahren eines Zweirads (wie Scooter, E-Scooter, Fahrrad oder Motorrad) getragen wird. Solche Westen können einfach über normale Kleidung angelegt werden und bestehen meistens aus einem Textil mit einer grellen Farbe, sodass diese Westen schon einfach zu erkennen sind. Zusätzlich sind an der Weste reflektierende Elemente eingearbeitet oder angebracht. Somit können die Träger der Westen in der Dämmerung und bei Nacht von vorbeifahrenden Verkehrsteilnehmern gut erkannt werden.

Aus DE 20 2016 007 645 U1 ist eine Weste bekannt, die Signalleuchten umfasst. Die Signalleuchten müssen allerdings mittels eines Kabels mit dem Zweirad verbunden werden. Damit die Signalleuchten funktionieren, muss also sichergestellt sein, dass die Weste im Betrieb mit dem Zweirad über das Kabel verbunden ist. Es muss auch darauf geachtet werden, dass der Fahrer beim Absteigen vom Zweirad die Kabelverbindung mit der Weste trennt.

In einigen Ländern gibt es sogar Bestrebungen, das Tragen solcher Warnwesten bei der Benutzung eines Zweirades verpflichtend zu machen.

Es stellt sich bei der Benutzung einer solchen Weste zudem regelmäßig das Problem, wie man die Weste handhabt, ob diese beispielsweise mitgeführt wird, wozu in der Regel eine Tasche benötigt wird.

Aufgabe der vorliegenden Erfindung ist es daher die Handhabung einer Weste und insbesondere Aufbewahrung einer Weste am Zielort nach der Fahrt mit einem Zweirad zu vereinfachen.

Eine weitere Aufgabe wird darin gesehen, die Sichtbarkeit eines Fahrers eines Zweirades zu verbessern und insbesondere das Verhalten des Fahrers für andere Verkehrsteilnehmer vorhersehbarer zu machen.

Gelöst wird die Aufgabe durch eine Weste mit den Merkmalen des unabhängigen Anspruchs 1.

Gelöst wird die Aufgabe durch eine Weste mit den Merkmalen des unabhängigen Anspruchs 5.

Beide Lösungen können auch in einer Weste gemeinsam verwirklicht werden, wodurch eine entsprechende Weste sicher und vielfältig einsetzbar ist.

Vorteilhafte Weiterbildungen der Weste sind in den abhängigen Ansprüchen und in der vorstehenden und nachfolgenden Beschreibung erläutert, wobei einzelne Merkmale der vorteilhaften Weiterbildungen in technisch sinnvoller Weise miteinander kombinierbar sind.

Es ist bereits bekannt, dass solche Westen zur besseren Fixierung während der Fahrt einen Gurt aufweisen, der an seinen Enden zwar jeweils ein Element einer Schnalle aufweist, sodass die Elemente zur Fixierung der Weste ineinandergesteckt werden können.

Es wird nun vorgeschlagen, dass der Gurt der Weste ein abschließbares Schloss umfasst. Ein solches abschließbares Schloss kann beispielsweise als Zahlenschloss, als ein mittels eines Schlüssels abschließbares Schloss und/oder als ein elektromechanisches Schloss ausgebildet sein.

Auf diese Weise kann die Weste beziehungsweise der Gurt der Weste am Zielort zum Anschließen des Zweirades an einen ortsfesten Gegenstand verwendet werden, sodass die Funktion der Weste erweitert wird.

Der Gurt der Weste ist hierzu insbesondere auf geeignete Weise an der Weste, insbesondere beweglich angebracht. Beispielsweise kann die Weste aus textilem Material bestehende Ösen aufweisen, durch die der Gurt hindurchgeführt ist. Die Weste kann auch mindestens einen durch textiles Material ausgebildeten Kanal aufweisen, durch welchen der Gurt hindurchgeführt ist. Hierzu kann beispielsweise ein textiles Material auf das die Weste bildende Material aufgenäht sein, wobei die Nähte an gegenüberliegenden Seiten des aufgenähten textilen Materials ausgebildet sind, sodass der so ausgebildete Kanal an zwei Seiten offen ist. Somit wird einerseits sichergestellt, dass der Gurt in einer vorbestimmten Position angeordnet ist, wenn die Weste getragen wird und andererseits sichergestellt, dass das textile Material im angeschlossenen Zustand nicht von dem Gurt entfernt werden kann.

Mit einem solchen abschließbaren Schloss wird also sichergestellt, dass nur der Benutzer, der den Schlüssel besitzt oder kennt, das Zweirad aufschließen kann. Zudem ist gleichzeitig sichergestellt, dass die für die weitere Fahrt benötigte Weste sich an dem Zweirad befindet.

Damit der Gurt im angeschnallten Zustand nicht mit einfachen Mittel zerstört werden kann, ist in einer bevorzugten Ausführungsform vorgesehen, dass der Gurt aus einem schnittfesten Textil, wie beispielsweise Aramid besteht. Der Gurt ist also bevorzugt aus Aramidfasern hergestellt, welche auch unter dem Markennamen Kevlar bekannt sind.

Gelöst wird die Aufgabe auch dadurch, dass die Weste eine Signaleinrichtung umfasst und dass die Signaleinrichtung dazu eingerichtet ist, bei einem Bremsvorgang aufzuleuchten, und dass die an der Weste ausgebildete Signaleinrichtung einen Beschleunigungssensor wie beispielsweise einen Gyrosensor aufweist.

Mit dem an der Weste ausgebildete Beschleunigungssensor kann eine Beschleunigung des Trägers der Weste und somit das Zweirades unabhängig vom Zweirad erfasst werden. Der Beschleunigungssensor kann beispielsweise als Gyrosensor ausgebildet sein.

Durch das Aufleuchten der Signaleinrichtung wird für dem Träger der Weste folgende Verkehrsteilnehmer unmittelbar signalisiert, dass sich der Bewegungszustand des Trägers ändert, wodurch der rückwärtige Verkehr den Bremsvorgang schneller erkennt und somit die Sicherheit des Trägers erhöht wird. Die Anordnung dieser Signaleinrichtung hat zudem den Vorteil, dass die den Bremsvorgang anzeigenden Leuchtmittel im Vergleich zu dem Zweirad an einer erhöhten Stelle angeordnet sind und somit für die folgenden Verkehrsteilnehmer besser sichtbar sind.

Die Signaleinrichtung umfasst insbesondere rotes Licht emittierende LEDs, die auf einer Rückseite der Weste angeordnet sind. Die rotes Licht emittierende LEDs können mehr oder weniger beliebig auf der Rückseite der Weste angeordnet werden. Beispielsweise können die LEDs zentral in einer rechteckigen, kreisrunden oder dreieckigen Anordnung auf der Rückseite der Weste befestigt sein. Die LEDs können auch in einem oder mehreren Streifen auf der Rückseite der Weste angeordnet sein.

Zusätzlich kann auch vorgesehen sein, dass die Signaleinrichtung eine oder mehrere weißes Licht emittierende LEDs umfasst, die insbesondere auf der Vorderseite der Weste angeordnet sind.

Erfindungsgemäß wird nun vorgeschlagen, dass zumindest ein Teil der Signaleinrichtung bei einem Bremsvorgang aufleuchtet, was insbesondere auch umfasst, dass Elemente der Signaleinrichtung bereits vor dem Bremsvorgang leuchten und mit dem Bremsvorgang heller leuchten. Dies umfasst insbesondere, dass die Signaleinrichtung in einem ersten Zustand mit einer ersten Intensität leuchtet und bei einem Bremsvorgang mit einer zweiten Intensität leuchtet, wobei die zweite Intensität größer ist als die erste Intensität. Die zweite Intensität ist insbesondere 20%, bevorzugt mindestens 50% größer als die erste Intensität.

Insbesondere wird vorgeschlagen, dass nur die rotes Licht emittierenden LEDs während des Bremsvorganges aufleuchten.

Der Beschleunigungssensor kann auch dazu verwendet werden, um überhaupt eine Bewegung der Weste und damit seines Trägers zu detektieren. Dabei kann insbesondere vorgesehen sein, dass bei einer Detektion einer Bewegung die Signaleinrichtung eingeschaltet wird und die LEDs somit insbesondere mit einer ersten Intensität Leuchten, während bei einem detektierten Bremsvorgang (Verzögerung, die nicht eine einfachen Ausrollen entspricht) aufleuchtet.

Die den Beschleunigungssensor umfassende Steuerung ist dabei insbesondere so eingerichtet, dass aufgrund der vom Beschleunigungssensor generierten Daten sicher erkannt wird, ob die Weste in Bewegung ist, sich in einem Bremsvorgang befindet oder sich in einem längeren Ruhezustand befindet. Wenn dabei ein Ruhezustand sicher erkannt wird, wird der Stromverbrauch der Signaleinrichtung verringert. Insbesondere enthält die Steuerung ein Programm für eine Mustererkennung, mittels welcher nicht relevante Vorgänge Beschleunigungsdaten ausgefiltert werden.

Die Erfindung sowie das technische Umfeld werden im Folgenden anhand der Figuren beispielshaft erläutert. Es zeigen schematisch
- Figur 1:: eine Frontansicht einer Weste,
- Figur 2:: eine Rückansicht einer Weste und
- Figur 3:: die Weste in einem ein Zweirad an einem Gegenstand anschließenden Zustand.

Die in den Figuren dargestellte Weste 1 weist einen Gurt 2 auf, dessen Gurtband 2.2 durch einen Kanal in der Weste hindurchgeführt ist. An den Enden des Gurtbandes 2.2 ist jeweils ein Schlossteil 2.1a und 2.1b eines abschließbaren Schlosses angebracht.

Das Schlossteil 2.2 kann in das Schlossteil 2.1 eingesteckt werden, wobei das Lösen des Schlossteils 2.1 durch eine mittels eines Schlüssels oder einer Zahlenkombination betätigbaren Schließeinrichtung verhindert werden kann.

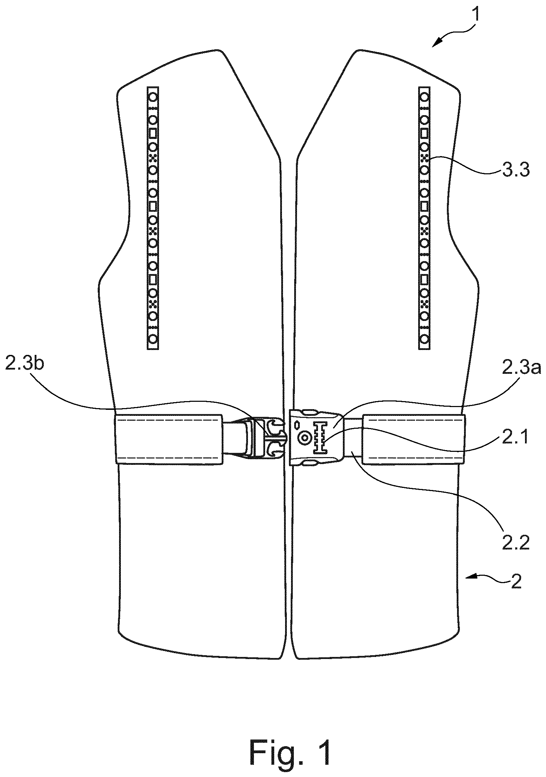

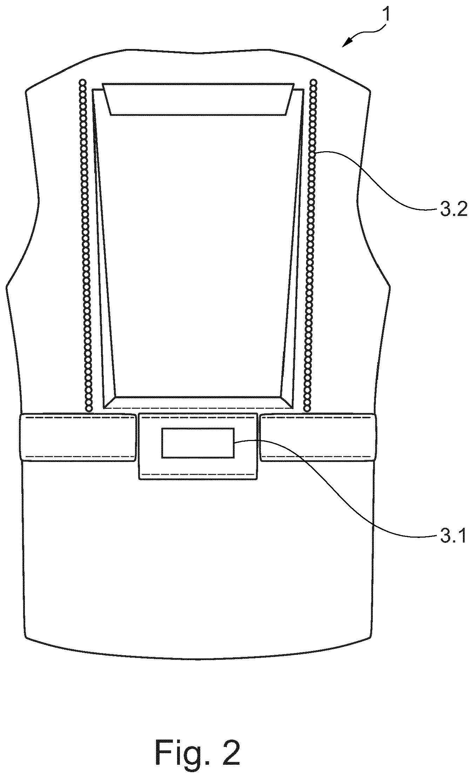

Auf der in Figur 1 sichtbaren Vorderseite der Weste 1 sind weiß leuchtende LEDs 3.1 einer Signaleinrichtung 3 angebracht. Auf der in Figur 2 sichtbaren Rückseite der Weste 1 sind zwei Streifen rot leuchtender LEDs 3.2 angebracht. Die LEDs 3.2 und 3.3 sind mit einer einen Beschleunigungssensor 3.1 umfassenden Steuerung verbunden. Die Steuerung ist so eingerichtet, dass bei der Feststellung eines sich bewegenden Trägers der Weste 1 beide LEDs 3.2 und 3.3 leuchten. Wenn ein Bremsvorgang eines Trägers der Weste 1 mittels des Beschleunigungssensors 3.1 detektiert wird, so leuchten die rotes Licht emittierenden LEDs 3.2 mit einer höheren Intensität auf. Die dem Träger der Weste 1 folgenden Verkehrsteilnehmer werden somit optisch auf den Bremsvorgang hingewiesen.

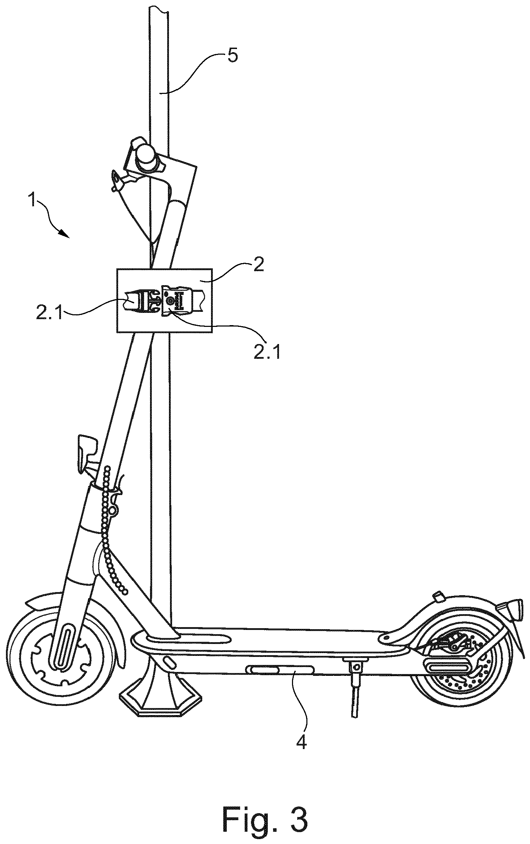

Das Gurtband 2.2 des Gurtes 2 ist aus einem schnittfesten Material wie beispielsweise Aramidfasern. Wenn der Träger der Weste 1 seinen Zielort erreicht hat, so kann er die Weste in geeigneter Weise aufrollen und den Gurt 2 zum Anschließen des Zweirades an einem ortsfesten Gegenstand verwenden, wie es in Figur 3 dargestellt ist.

Die Weste 1 erfüllt somit mehrere Funktionen. Einerseits warnt sie die nachfolgenden Verkehrsteilnehmer vor einer Abbremsung des Trägers der Weste und andererseits kann sie am Zielort zur Sicherung des Zweirades gegen Diebstahl dienen.

### Bezugszeichenliste

- 1: Weste
- 2: Gurt
- 2.1: Schloss
- 2.1a: Schlossteil
- 2.1b: Schlossteil
- 2.2: Gurtband
- 3: Signaleinrichtung
- 3.1: Beschleunigungssensor
- 3.2: LED
- 3.3: LED

## Patentansprüche

1. Weste (1), umfassend eine Signaleinrichtung (3), wobei die Signaleinrichtung (3) dazu eingerichtet ist, bei einem Bremsvorgang aufzuleuchten, **dadurch gekennzeichnet, dass** die Signaleinrichtung (3) einen Beschleunigungssensor (3.1) umfasst.

2. Weste (1) nach Anspruch 1, wobei die Signaleinrichtung (3) in einem ersten Zustand mit einer ersten Intensität leuchtet und bei einem Bremsvorgang mit einer zweiten Intensität leuchtet, wobei die zweite Intensität größer ist als die erste Intensität.

3. Weste (1) nach einem der vorhergehenden Ansprüche, wobei die Signaleinrichtung (3) mindestens eine, rotes Licht emittierende LED (3.2) umfasst, die bei einem Bremsvorgang aufleuchten.

4. Weste (1) nach Anspruch 3, wobei die Signaleinrichtung (3) mindestens eine, weißes Licht emittierende LED (3.3) umfasst, die bei einem Bremsvorgang nicht aufleuchten.

5. Weste (1), insbesondere nach einem der vorhergehenden Ansprüche, umfassend einen Gurt (2), **dadurch gekennzeichnet, dass** der Gurt (2) ein abschließbares Schloss (2.1) umfasst.

6. Weste (1) nach Anspruch 5, wobei das Schloss (2.1) ein Zahlenschloss, ein mittels eines Schlüssels abschließbares Schloss und/oder ein elektromechanisches Schloss umfasst.

7. Weste (1) nach einem der vorhergehenden Ansprüche, wobei ein Gurtband (2.2) des Gurtes (2) aus einem schnittfesten Textil, wie beispielsweise aus Aramid, besteht.

8. Verwendung einer einen Gurt (2) mit einem abschließbaren Schloss (2.1) umfassenden Weste (1), insbesondere einer Weste (1) nach einem auf den Anspruch 5 rückbezogenen Anspruch, zum Anschließen eines Zweirads an einen ortsfesten Gegenstand.
